# EUROPÄISCHE PATENTSCHRIFT

(11) **EP 3 387 303 B1**
(45) Veröffentlichungstag und Bekanntmachung des Hinweises auf die Patenterteilung: **06.11.2019**
(21) Anmeldenummer: 16808982.9
(22) Anmeldetag: 05.12.2016
(51) Int. Cl.: F16K 31/04, F16K 31/54, F02M 26/67

(54) **VENTIL**
VALVE
SOUPAPE

(30) Priorität: 07.12.2015 DE 102015224466
(43) Veröffentlichungstag der Anmeldung: 17.10.2018
(73) Patentinhaber: CPT Group GmbH, 30165 Hannover (DE)
(72) Erfinder: WEIS, Christian, 55257 Budenheim (DE); MIKOLAJEK, Carsten, 64347 Griesheim (DE)
(86) Internationale Anmeldenummer: PCT/EP2016/079774
(87) Internationale Veröffentlichungsnummer: WO 2017/097714

(56) Entgegenhaltungen:
- US-A- 5 529 282
- US-A1- 2010 176 325
- US-A1- 2010 319 663
- US-A1- 2013 139 503

## Beschreibung

### Technisches Gebiet

Die Erfindung betrifft ein Ventil mit den Merkmalen des Oberbegriffs von Patentanspruch 1.

### Stand der Technik

In einer Vielzahl von Anwendungsbereichen werden zum Zwecke der Betätigung eines Ventils Rotationsbewegungen eines Antriebsmotors in eine lineare beziehungsweise in eine translatorische Bewegung übersetzt. Dieses Prinzip wird beispielsweise auch bei Ventilen zur Steuerung der Abgasrückführung in Kraftfahrzeugen angewendet. Hierzu wird oftmals eine Getriebeübersetzung genutzt, die mit einer entsprechenden Kinematik die Drehbewegung in eine lineare beziehungsweise translatorische Bewegung übersetzt. Die Übersetzung der Drehbewegung kann beispielsweise über einen Kurbelantrieb oder ein Kulissengetriebe realisiert werden. Hierzu sind im Stand der Technik vielfältige konstruktive Ausgestaltungen bekannt.

Nachteilig an Vorrichtungen dieser Art ist insbesondere, dass bei der Übersetzung der Bewegung unerwünschte Querkräfte entstehen, die auf den Ventilstößel oder den Ventilteller übertragen werden können. Dies führt zu einer höheren Abnutzung und zu einer reduzierten Lebensdauer. Außerdem kann es zu einem Verkanten des Ventils kommen.

Weiterhin nachteilig ist, dass insbesondere Kulissen in Kulissengetrieben mit einer sehr hohen Fertigungsgenauigkeit erzeugt werden müssen, um das Spiel am Ventilteller und Ventilstößel möglichst gering zu halten. Auch ist es nachteilig, dass aufgrund von Bauraumvorgaben und der konstruktiven Ausgestaltung von Kurbelantrieben oder Kulissenantrieben oft nur eine einseitige Lagerung des Ventilstößels bzw. der Kinematik zur Übersetzung der Bewegung vorgesehen ist, wodurch es insbesondere zum Verkippen beziehungsweise Verkanten des Ventilstößels kommen kann.

Ein Ventil mit den Merkmalen des Oberbegriffs von Patentanspruch 1 ist aus der US 2010/0176325 A1 bekannt. Auch bei dieser bekannten Ausführungsform besteht die Gefahr, dass es zum Verkippen bzw. Verkanten des Ventilstößels kommen kann.

Aus der US 5,529,282 ist eine Ventilbetätigungsvorrichtung bekannt, bei der ein Motor ein Ritzel betätigt, das wiederum eine Zahnstange betätigt, welche einen Ventilstößel auf- und abbewegt. Durch eine Feder wird der Ventilstößel in seine Ausgangsstellung zurückgeführt. Ferner drücken Federn den vorgesehenen Zahnstangenmechanismus nach unten. Diese Betätigungsvorrichtung weist keinen Kipphebelmechanismus auf.

### Darstellung der Erfindung, Aufgabe, Lösung, Vorteile

Daher ist es die Aufgabe der vorliegenden Erfindung ein Ventil zu schaffen, welches einen möglichst einfachen Aufbau aufweist und bei dem im Betrieb möglichst geringe Querkräfte oder Momente auf den Ventilstößel einwirken, welche die Haltbarkeit des Ventils beeinträchtigen.

Die Aufgabe hinsichtlich des Ventils wird durch ein Ventil mit den kennzeichnenden Merkmalen von Anspruch 1 gelöst.

Die Erfindung betrifft ein Ventil zum Freigeben oder Verschließen einer Strömungsstrecke mit einem Ventilteller, einem Ventilstößel und mit einer Übersetzungsvorrichtung zur Übersetzung einer Drehbewegung in eine translatorische Bewegung, wobei die Übersetzungsvorrichtung durch einen um eine Drehachse drehbar gelagerten Kipphebel gebildet ist, wobei der Kipphebel mittels Schubstangen mit dem Ventilstößel verbunden ist, wobei die Schubstangen gegenüber dem Kipphebel und dem Ventilstößel drehbar gelagert sind, wobei das Ventil eine Rückstellvorrichtung aufweist, durch welche eine Kraftkomponente erzeugbar ist, die einer Bewegung des Ventilstößels, welche durch den Kipphebel und die Schubstangen auf den Ventilstößel übertragbar ist, entgegenwirkt.

Ein Ventil der oben beschriebenen Art ist insbesondere für den Einsatz in einem Abgasrückführungssystem vorteilhaft. Durch den Ventilteller, der vorzugsweise in einem Ventilsitz angeordnet ist, kann ein Strömungsweg freigegeben werden, indem der Ventilteller aus dem Ventilsitz bewegt wird. Das Verschließen der Strömungsstrecke kann durch ein Einfahren des Ventiltellers in den Ventilsitz erreicht werden.

Durch die Übersetzungsvorrichtung kann die Übersetzung der Drehbewegung eines Elektromotors in eine translatorische Bewegung erreicht werden. Dabei wird im Wesentlichen der Ventilstößel und der starr mit dem Ventilstößel verbundene Ventilteller translatorisch bewegt. Um ein sicheres Schließen des Ventils zu gewährleisten ist besonders vorteilhaft eine Rückstellvorrichtung vorgesehen, die der Öffnungsbewegung des Ventils entgegenwirkt. Die von der Rückstellvorrichtung erzeugt Kraftkomponenten wirkt dabei besonders bevorzugt exakt entgegengesetzt zur Verstellrichtung des Ventilstößels. Auf diese Weise kann erreicht werden, dass bei einem Ausfall des Antriebsmotors oder einer sonstigen Fehlfunktion, die dazu führt, dass vom Antriebsmotor keine Stellkraft mehr auf den Ventilstößel übertragen wird, eine Schließung des Ventils durch die Rückstellvorrichtung erreicht wird. Dadurch kann eine Beschädigung des Ventils, insbesondere des Ventiltellers oder des Ventilstößels, vermieden werden. Auch kann ein unkontrolliertes durchströmen der Strömungsstrecke vermieden werden.

Die Komprimierungsrichtung und die Entspannungsrichtung der Rückstellvorrichtung verlaufen parallel zur Mittelachse des Ventilstößels. Dies ist besonders vorteilhaft, um das Entstehen von Querkräften oder störenden Momenten, die der Bewegung des Ventilstößels entgegenstehen könnten, zu vermindern oder gänzlich zu verhindern. Hierbei ist insbesondere entscheidend, dass die Kraftvektoren nahezu parallel zueinander verlaufen, um kein Verkippen oder Verkanten des Ventilstößels oder des Ventiltellers zu verursachen. Eine vollständig parallele Anordnung und Führung ist in einem realen System nicht erreichbar, da grundsätzlich immer ein gewisses Verkippen zwischen den Elementen stattfinden wird. Jedoch ist vorzugsweise der Grad des Verkippens der Elemente zueinander vorzugsweise sehr gering gehalten. Besonders vorteilhaft ist ein Verkippen um maximal 0,5 Grad in jede Richtung.

Durch Querkräfte kann die zur eigentlichen Verstellung benötigte Kraft erhöht werden, wodurch einerseits eine Beschädigung des Ventils verursacht werden kann und es andererseits auch zu einem energetisch ineffizienten Betrieb des Ventils kommt.

Die Rückstellvorrichtung ist durch zwei parallel zueinander angeordnete Federn gebildet. Durch zwei parallel zueinander angeordnete Federn, insbesondere Spiralfedern, deren Mittelachse beide parallel zur Mittelachse des Ventilstößels verlaufen kann eine besonders homogene Krafteinleitung in den Ventilstößels erreicht werden. Durch einen unvermeidbaren Versatz in radialer Richtung zwischen der Mittelachse des Ventilstößels und der Mittelachsen der Federn und den daraus resultierenden Hebelarm kommt es unweigerlich zu Momenten, die um den Ventilstößel wirken und diesen aus seiner ursprünglichen Lage herausdrehen. Durch das Anordnen von Federn auf zwei Seiten des Ventilstößels kann das durch die eine Feder erzeugte Moment durch das durch die jeweils andere Feder erzeugte Moment ausgeglichen werden. Weiterhin kann durch die Anordnung von zwei Federn die Montage der Rückstellvorrichtung vereinfacht werden.

Ferner sind die Federn über plattenförmige Fortsätze des Ventilstößels miteinander gekoppelt. Dies ist besonders vorteilhaft, um eine direkte Einleitung der von den Federn erzeugten Kräfte in den Ventilstößel zu erreichen.

Auch ist es zu bevorzugen, wenn die Rückstellvorrichtung gegenüber einer das Ventil umgebenden raumfesten Struktur abgestützt ist, wobei eine Federkraft zwischen der raumfesten Struktur und dem Ventilstößel übertragbar ist. Dies ist vorteilhaft, um eine Kraftkomponente zur Rückstellung des Ventilstößels zu erzeugen. Eine Abstützung der Federn am Ventil selbst wäre konstruktiv sehr aufwändig und würde zu einer sehr komplexen Gestaltung des Ventils führen.

Darüber hinaus ist es vorteilhaft, wenn der Ventilstößel mittels genau eines Radiallagers gegenüber einer raumfesten das Ventil umgebenden Struktur abgestützt ist. Die Verwendung nur eines Radiallagers, beispielsweise einer Gleithülse, ist besonders vorteilhaft, da dadurch der Aufbau des Ventils vereinfacht wird und damit die Montage und der benötigte Bauraum verkleinert wird. In einer alternativen Ausführung können auch mehrere Radiallager vorgesehen sein, die in axialer Richtung jeweils eine kürzere Erstreckung aufweisen als das einzelne Radiallager. Bei mehreren kurzen Radiallagern sind die Radiallager bevorzugt in unmittelbarer Nähe der Endbereiche des Ventilstößels angeordnet, um ein Verkippen des Ventilstößels wirkungsvoll zu vermeiden.

Weiterhin ist es vorteilhaft, wenn die Schubstangen starr miteinander verbunden sind, so dass eine Bewegungskopplung zwischen den beiden Schubstangen realisiert ist. Dies ist vorteilhaft, um insgesamt eine höhere Stabilität im Ventil zu erreichen und insbesondere Verdrehungen und das Verkippen zu vermeiden. Insbesondere die Kinematik des Ventils wird hierdurch deutlich verbessert. Die beiden Schubstangen können beispielsweise miteinander verschweißt sein oder über ein anderes Koppelelement, welches die Freigängigkeit des Ventilstößels nicht einschränkt, starr miteinander verbunden sein.

Auch ist es zweckmäßig, wenn der Kipphebel mit den Schubstangen und dem Ventilstößel ein Kniehebel-Gelenk bildet. Ein Kniehebel-Gelenk bildet ein besonders robustes und stabiles Gelenk aus, das insbesondere für die Übertragung von kleineren Bewegungen vorteilhaft ist. Insbesondere durch die Anordnung der Drehachse des Kipphebels und der Anbindung der Schubstangen am Kipphebel in Relation zur Drehachse kann die maximal mögliche Bewegung durch das Kniehebel-Gelenk beeinflusst werden.

Darüber hinaus ist es vorteilhaft, wenn die Schubstangen Aussparungen aufweisen, durch welche der zwischen den Schubstangen angeordnete Ventilstößel zugänglich ist. Die Aussparungen sind insbesondere durch Ausstanzungen in den Schubstangen gebildet. Diese erlauben vorteilhaft einen Zugriff auf den zwischen den Schubstangen angeordneten Ventilstößel. Dies ist insbesondere zu Montagezwecken vorteilhaft, da beispielsweise die Verbindung zwischen den Federn und den plattenförmigen Elementen des Ventilstößels einfacher hergestellt werden kann.

Die Aussparungen sind weiterhin vorteilhaft, um auch die Verwendung von besonders langen Ventilstößeln zu ermöglichen. Durch die Verwendung von langen Ventilstößeln können die auftretenden Querkräfte weiter reduziert werden. Um trotz des gewöhnlich sehr begrenzten Bauraums einen möglichst langen Ventilstößel verwenden zu können, ist es vorteilhaft, wenn auch durch die Schubstangen hinweg auf den Ventilstößel zugegriffen werden kann. Dies vereinfacht insbesondere die Montage erheblich.

Weiterhin ist es zweckmäßig, wenn der Ventilstößel in dem durch die Aussparungen in den Schubstangen zugänglichen Bereich einen Aufnahmebereich für ein Sensorelement und/oder zur Anbindung einer Welle zur Lagerung der Schubstangen aufweist. Dies ist vorteilhaft, um beispielswies einen Lagesensor an den Ventilstößel zu montieren, um damit eine Echtzeitüberwachung der Position des Ventilstößels durchzuführen.

Auch ist es zu bevorzugen, wenn die Schubstangen gegenüber dem Ventilstößel und dem Kipphebel drehbar gelagert sind. Durch eine drehbare Lagerung der Schubstangen kann das Kniehebel-Gelenk erst voll funktionsfähig realisiert werden, da ein Relativbewegung, insbesondere eine Verdrehung, zwischen dem Kipphebel und den Schubstangen und zwischen den Schubstangen und dem Ventilstößel notwendig ist, um einen ausreichend großen Verstellweg des Ventils zu realisieren.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine perspektivische Ansicht eines erfindungsgemäßen Ventils mit zwei parallel zum Ventilstößel angeordneten Federn, die als Rückstellvorrichtung dienen,
- Fig. 2: eine Seitenansicht des Ventils gemäß Figur 1, wobei die Mittelachse des Ventilstößels und der Federn in der Zeichnungsebene liegen,
- Fig. 3: eine Seitenansicht des Ventils gemäß der Figuren 1 und 2, wobei die Ansicht des Ventils um 90 Grad gegenüber der Figur 2 gedreht ist, und
- Fig. 4: eine Aufsicht auf das Ventil gemäß der Figuren 1 bis 3, wobei der Blick von oben entlang der Mittelachse des Ventilstößels gerichtet ist.

### Bevorzugte Ausführung der Erfindung

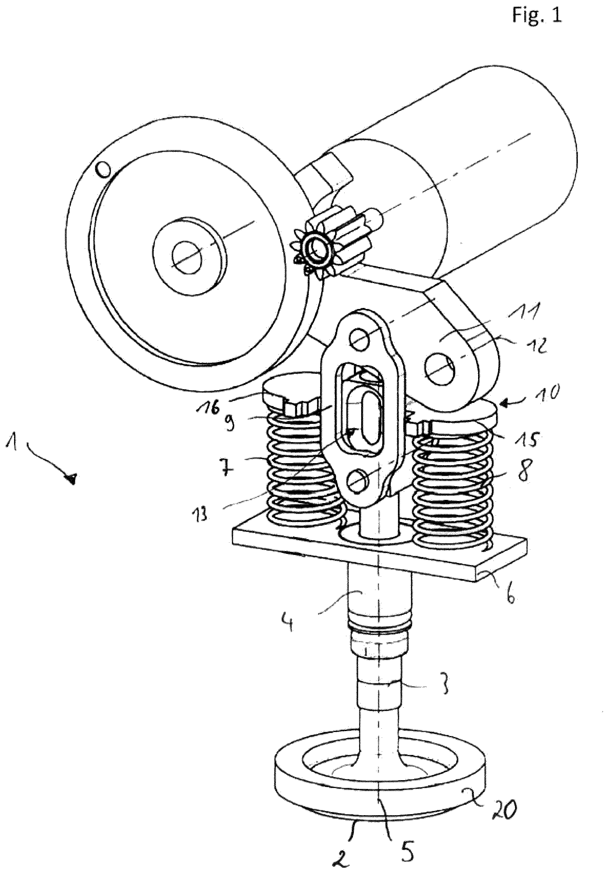

Die Figur 1 zeigt eine perspektivische Ansicht eines Ventils 1. Das Ventil 1 weist einen Ventilteller 2 auf, der starr mit einem Ventilstößel 3 verbunden ist. Der Ventilstößel 3 ist durch ein Radiallager 4, welches durch eine Hülse gebildet ist, entlang einer Achse 5 beweglich gelagert. Die Achse 5 entspricht auch der Mittelachse 5 des Ventilstößels 3. Der Ventilteller 2 kann entlang der Mittelachse 5 des Ventilstößels 3 bewegt werden, wodurch er in einen Ventilsitz 20 hinein oder aus dem Ventilsitz 20 hinaus bewegt werden kann. Dadurch kann eine Strömungsstrecke freigegeben werden oder verschlossen werden. Der Ventilsitz 20 ist in den Figuren 1 bis 4 als ringförmiges Element angedeutet und ist vorzugsweise Teil eines nicht gezeigten Gehäuses, welches beispielsweise einen Strömungskanal begrenzt.

Das Plattenelement 6 ist stellvertretend für eine raumfeste Struktur, etwa ein Gehäuse, dargestellt. In diese raumfeste Struktur kann das Ventil 1 vorteilhaft integriert sein und insbesondere können die gezeigten Federn 7, 8 gegenüber dieser raumfesten Struktur abgestützt sein.

Der obere Endbereich des Ventilstößels 3 ist zwischen den Federn 7 und 8 angeordnet und ist über Schubstangen 9, 10 mit einem darüber angeordneten Kipphebel 11 verbunden. Die Schubstangen 9, 10 sind sowohl gegenüber dem Ventilstößel 3 als auch gegenüber dem Kipphebel 11 drehbar gelagert. Der Kipphebel 11 ist selbst um die Drehachse 12 drehbar gelagert.

Die Schubstangen 9, 10 sind beidseitig von dem Ventilstößel 3 angeordnet und in Umfangsrichtung des Ventilstößels 3 um 90 Grad zu den Federn 7, 8 verdreht angeordnet. Im Ausführungsbeispiel der Figur 1 weist jede der Schubstangen 9, 10 eine Aussparung 13 auf. Die hier gezeigten Schubstangen 9, 10 sind beispielsweise durch Stanzteile aus einem plattenförmigen Werkstoff gebildet. Oberhalb und unterhalb der Aussparung 13 sind die Lagerstellen angeordnet, welche beispielsweise durch Bohrungen in den Schubstangen 9, 10 gebildet sind. In die Bohrungen greifen Wellenfortsätze ein, die eine verdrehbare Lagerung der Schubstangen 9, 10 sowohl an dem Kipphebel 12 als auch an dem Ventilstößel 3 ermöglichen.

Durch die Aussparungen 13 kann insbesondere auf den oberen Endbereich des Ventilstößels 3 zugegriffen werden, wodurch beispielsweise die Montage vereinfacht werden kann.

Die Drehachsen, um welche die Schubstangen 9, 10 gegenüber dem Ventilstößel 3 und dem Kipphebel 11 verdrehbar sind, sind parallel zur Drehachse 12 des Kipphebels 11 angeordnet. Dies ist vorteilhaft, um eine möglichst stabile Kinematik im Ventil 1 zu erzeugen und das Auftreten von unerwünschten Querkräften und störenden Momenten zu vermeiden.

Der Kipphebel 11 ist über ein Zahnsegment und eine Antriebsscheibe mit einem Antriebsmotor gekoppelt, so dass die Drehbewegung des Antriebsmotors auf den Kipphebel 11 übertragen werden kann. Durch ein Verdrehen des Kipphebels 11 um die Drehachse 12 werden die Schubstangen 9, 10 abhängig von der Drehrichtung des Antriebsmotors auf und ab bewegt, wodurch letztlich auch der Ventilstößel 3 auf und ab bewegt wird.

Die Federn 7, 8 sind über plattenförmige Fortsätze 15, 16 am Ventilstößel 3 abgestützt und erzeugen somit abhängig von der Bewegung des Ventilstößels 3 eine Vorspannkraft zwischen dem Plattenelement 6 und den plattenförmigen Fortsätzen 15, 16. Durch eine Abwärtsbewegung des Ventilstößels 3 werden die Federn 7, 8 komprimiert, wodurch eine Vorspannkraft entgegengesetzt der Bewegungsrichtung erzeugt wird. Die Federn 7, 8 unterstützen somit die Rückstellung, also die Aufwärtsbewegung, des Ventilstößels 3.

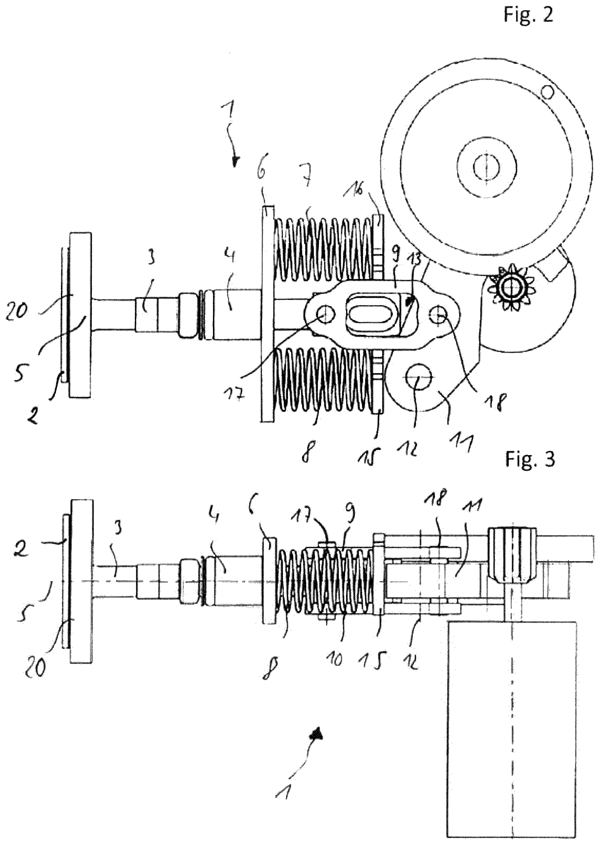

Die Figuren 2 bis 4 zeigen jeweils eine identische Ausführungsform des Ventils 1 der Figur 1. Identische Elemente sind daher mit denselben Bezugszeichen bezeichnet.

Die Figur 2 zeigte eine Seitenansicht des Ventils 1 der Figur 1. Es ist insbesondere die parallele Anordnung der Federn 7, 8 zur Mittelachse 5 zu erkennen. Die Schubstangen 9, 10 sind in der in Figur 2 dargestellten Position des Ventils 1 derart angeordnet, dass die Mittelachse 5 die Lagerstellen 17, 18 der Schubstangen 9, 10 schneidet. Dies ist vorteilhaft, weil die Kraftübertragung von den Schubstangen 9, 10 auf den Ventilstößel 3 exakt in Richtung der Mittelachse 5 und damit der Bewegungsrichtung des Ventilstößels 3 erfolgt, wodurch die auftretenden Querkräfte deutlich reduziert werden.

Die Figur 3 zeigt eine weitere Seitenansicht des Ventils 1, wobei insbesondere zu erkennen ist, dass die Mittelachse 5 des Ventilstößels mit der Mittelebene des Kipphebels 11 deckungsgleich ist. Auch hierdurch wird das Entstehen von Querkräften vermieden beziehungsweise zumindest deutlich reduziert.

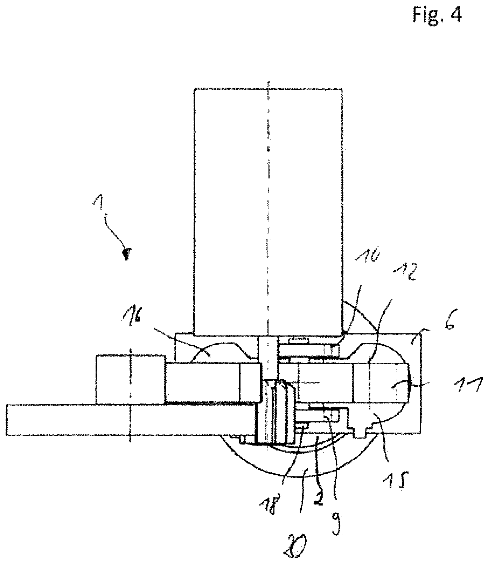

Die Figur 4 zeigt eine Aufsicht auf das Ventil 1. Es ist besonders gut zu erkennen, dass die plattenförmigen Fortsätze 15, 16 des Ventilstößels 3 derart ausgebildet sind, dass die Schubstangen 9, 10 kollisionsfrei seitlich an diesen vorbei bewegt werden können. Auch ist in der Aufsicht ebenfalls zu erkennen, dass die vom Kipphebel 11 verdeckte Mittelachse 5 exakt mittig zwischen den Mittelachsen der Federn 7, 8 und den beiden Schubstangen 9, 10 angeordnet ist und durch die Mittelebene des Kipphebels 11 verläuft.

Die Ausführungsbeispiele der Figuren 1 bis 4 weisen insbesondere keinen beschränkenden Charakter auf und dienen der Verdeutlichung des Erfindungsgedankens. Auch abweichende konstruktive Ausgestaltungen der einzelnen Elemente sind vom Schutzbereich umfasst.

## Patentansprüche

1. Ventil (1) zum Freigeben oder Verschließen einer Strömungsstrecke, mit einem Ventilteller (2), einem Ventilstößel (3) und mit einer Übersetzungsvorrichtung zur Übersetzung einer Drehbewegung in eine translatorische Bewegung, wobei die Übersetzungsvorrichtung durch einen um eine Drehachse (12) drehbar gelagerten Kipphebel (11) gebildet ist, wobei der Kipphebel (11) mittels Schubstangen (9, 10) mit dem Ventilstößel (3) verbunden ist, wobei die Schubstangen (9, 10) gegenüber dem Kipphebel (11) und dem Ventilstößel (3) drehbar gelagert sind, wobei das Ventil (1) eine Rückstellvorrichtung (7, 8) aufweist, durch welche eine Kraftkomponente erzeugbar ist, die einer Bewegung des Ventilstößels (3), welche durch den Kipphebel (11) und die Schubstangen (9, 10) auf den Ventilstößel (3) übertragbar ist, entgegenwirkt, d a - **durch gekennzeichnet**, dass die Komprimierungsrichtung und die Entspannungsrichtung der Rückstellvorrichtung (7, 8) parallel zur Mittelachse (5) des Ventilstößels (3) verlaufen, die Rückstellvorrichtung (7, 8) durch zwei parallel zueinander angeordnete Federn (7, 8) gebildet ist und die Federn (7, 8) über plattenförmige Fortsätze (15, 16) des Ventilstößels (3) miteinander gekoppelt sind.

2. Ventil (1) nach Anspruch 1, **dadurch gekennzeichnet, dass** die Rückstellvorrichtung (7, 8) gegenüber einer das Ventil (1) umgebenden raumfesten Struktur (6) abgestützt ist, wobei eine Federkraft zwischen der raumfesten Struktur (6) und dem Ventilstößel (3) übertragbar ist.

3. Ventil (1) nach einem der vorhergehenden Ansprüche, **dadurch gekennzeichnet, dass** der Ventilstößel (3) mittels eines Radiallagers (4) gegenüber einer raumfesten das Ventil (1) umgebenden Struktur abgestützt ist.

4. Ventil (1) nach einem der vorhergehenden Ansprüche, **dadurch gekennzeichnet, dass** die Schubstangen (9, 10) starr miteinander verbunden sind, so dass eine Bewegungskopplung zwischen den beiden Schubstangen (9, 10) realisiert ist.

5. Ventil (1) nach einem der vorhergehenden Ansprüche, **dadurch gekennzeichnet, dass** der Kipphebel (11) mit den Schubstangen (9, 10) und dem Ventilstößel (3) ein Kniehebel-Gelenk bildet.

6. Ventil (1) nach einem der vorhergehenden Ansprüche, **dadurch gekennzeichnet, dass** die Schubstangen (9, 10) Aussparungen (13) aufweisen, durch welche der zwischen den Schubstangen (9, 10) angeordnete Ventilstößel (3) zugänglich ist.

7. Ventil (1) nach Anspruch 6, **dadurch gekennzeichnet, dass** der Ventilstößel (3) in dem durch die Aussparungen (13) in den Schubstangen (9, 10) zugänglichen Bereich einen Aufnahmebereich für ein Sensorelement und/oder zur Anbindung einer Welle zur Lagerung der Schubstangen (9, 10) aufweist.

8. Ventil (1) nach einem der vorhergehenden Ansprüche, **dadurch gekennzeichnet, dass** die Schubstangen (9, 10) gegenüber dem Ventilstößel (3) und dem Kipphebel (11) drehbar gelagert sind.

## Claims

1. Valve (1) for opening or closing a flow path, having a valve disc (2), a valve plunger (3) and a transmission device for converting a rotational movement into a translational movement, wherein the transmission device is formed by a rocker arm (11) which is mounted so as to be rotatable about an axis of rotation (12), wherein the rocker arm (11) is connected to the valve plunger (3) by means of thrust rods (9, 10), wherein the thrust rods (9, 10) are mounted so as to be rotatable with respect to the rocker arm (11) and the valve plunger (3), wherein the valve (1) has a restoring device (7, 8) by means of which a force component can be generated which counteracts a movement of the valve plunger (3) that can be transmitted to the valve plunger (3) by the rocker arm (11) and the thrust rods (9, 10), **characterized in that** the compression direction and the expansion direction of the restoring device (7, 8) extend parallel to the centre axis (5) of the valve plunger (3), the restoring device (7, 8) is formed by two springs (7, 8) arranged parallel to one another, and the springs (7, 8) are coupled to one another via plate-shaped extensions (15, 16) of the valve plunger (3) .

2. Valve (1) according to Claim 1, **characterized in that** the restoring device (7, 8) is supported with respect to a spatially fixed structure (6) which surrounds the valve (1), wherein a spring force can be transmitted between the spatially fixed structure (6) and the valve plunger (3).

3. Valve (1) according to either of the preceding claims, **characterized in that** the valve plunger (3) is supported by means of a radial bearing (4) with respect to a spatially fixed structure surrounding the valve (1).

4. Valve (1) according to one of the preceding claims, **characterized in that** the thrust rods (9, 10) are rigidly connected to one another such that a movement coupling between the two thrust rods (9, 10) is realized.

5. Valve (1) according to one of the preceding claims, **characterized in that** the rocker arm (11) forms a toggle lever joint with the thrust rods (9, 10) and the valve plunger (3).

6. Valve (1) according to one of the preceding claims, **characterized in that** the thrust rods (9, 10) have cutouts (13) through which the valve plunger (3) arranged between the thrust rods (9, 10) is accessible.

7. Valve (1) according to Claim 6, **characterized in that** the valve plunger (3) has, in the region accessible through the cutouts (13) in the thrust rods (9, 10), a receiving region for a sensor element and/or for attachment of a shaft for mounting the thrust rods (9, 10).

8. Valve (1) according to one of the preceding claims, **characterized in that** the thrust rods (9, 10) are mounted so as to be rotatable with respect to the valve plunger (3) and the rocker arm (11).

## Revendications

1. Soupape (1) servant à dégager ou fermer une voie d'écoulement, comprenant un disque de soupape (2), un poussoir de soupape (3) et un dispositif de conversion servant à la conversion d'un mouvement rotatif en un mouvement de translation, le dispositif de conversion étant formé par un culbuteur (11) monté rotatif autour d'un axe de rotation (12), le culbuteur (11) étant relié au poussoir de soupape (3) au moyen de tiges de poussée (9, 10), les tiges de poussée (9, 10) étant montées rotatives par rapport au culbuteur (11) et au poussoir de soupape (3), la soupape (1) comprenant un dispositif de rappel (7, 8) au moyen duquel une composante de force peut être produite, laquelle agit à l'encontre d'un mouvement du poussoir de soupape (3), lequel mouvement peut être transmis au poussoir de soupape (3) au moyen du culbuteur (11) et des tiges de poussée (9, 10), **caractérisée en ce que** la direction de compression et la direction de détente du dispositif de rappel (7, 8) s'étendent parallèlement à l'axe médian (5) du poussoir de soupape (3), le dispositif de rappel (7, 8) est formé par deux ressorts (7, 8) disposés parallèlement l'un à l'autre et les ressorts (7, 8) sont accouplés l'un à l'autre par le biais de saillies (15, 16) en forme de plaques du poussoir de soupape (3).

2. Soupape (1) selon la revendication 1, **caractérisée en ce que** le dispositif de rappel (7, 8) est supporté par rapport à une structure (6) fixe spatialement entourant la soupape (1), une force de ressort pouvant être transmise entre la structure (6) fixe spatialement et le poussoir de soupape (3).

3. Soupape (1) selon l'une des revendications précédentes, **caractérisée en ce que** le poussoir de soupape (3) est supporté au moyen d'un palier radial (4) par rapport à une structure fixe spatialement entourant la soupape (1).

4. Soupape (1) selon l'une des revendications précédentes, **caractérisée en ce que** les tiges de poussée (9, 10) sont reliées rigidement l'une à l'autre de telle sorte qu'un couplage de mouvement entre les deux tiges de poussée (9, 10) soit réalisé.

5. Soupape (1) selon l'une des revendications précédentes, **caractérisée en ce que** le culbuteur (11) forme, avec les tiges de poussée (9, 10) et le poussoir de soupape (3), une articulation de genouillère.

6. Soupape (1) selon l'une des revendications précédentes, **caractérisée en ce que** les tiges de poussée (9, 10) comprennent des évidements (13) à travers lesquels le poussoir de soupape (3) disposé entre les tiges de poussée (9, 10) est accessible.

7. Soupape (1) selon la revendication 6, **caractérisée en ce que** le poussoir de soupape (3) comprend, dans la région accessible à travers les évidements (13) dans les tiges de poussée (9, 10), une région de réception pour un élément de détection et/ou pour la liaison d'un arbre pour le montage des tiges de poussée (9, 10).

8. Soupape (1) selon l'une des revendications précédentes, **caractérisée en ce que** les tiges de poussée (9, 10) sont montées rotatives par rapport au poussoir de soupape (3) et au culbuteur (11) .
